# EUROPEAN PATENT APPLICATION

(11) **EP 1 031 620 A2**
(43) Date of publication of application: **30.08.2000**
(21) Application number: 00103613.6
(22) Date of filing: 21.02.2000
(51) Int. Cl.: C09K 3/10, C08L 23/10

(54) **Gasket fitted to frame and process for producing the same**

(30) Priority: 25.02.1999 JP 4839899; 14.10.1999 JP 29234499; 14.10.1999 JP 29234699
(71) Applicant: Bridgestone Corporation, Tokyo (JP)
(72) Inventor: Nishimuro, Youichi, Kunitachi-shi, Tokyo (JP); Toyosawa, Shinichi, Tokorozawa-shi, Saitama-ken (JP); Machida, Kunio, Tokyo (JP)
(74) Representative: Gille Hrabal Struck Neidlein Prop Roos

(57) **Abstract**

There is disclosed a gasket fitted to a frame body, wherein the frame body is constituted of polypropylene produced through polymerization by using a metallocene catalyst; propylene homopolymer and/or propylene copolymer comprising propylene as a principal component each free from a lubricant; propylene homopolymer and/or propylene copolymer comprising propylene as a principal component each having been heat treated; or propylene homopolymer and/or propylene copolymer comprising propylene as a principal component each having an MFR (melt flow rate) at a temperature of 230°C at a load of 2,16 kgf (21.2 N) being at most 20 g/ 10minutes as measured according to JIS K7210, and the gasket is constituted of an elastic body such as a thermoplastic elastomer, and is also disclosed a process for producing the gasket fitted to the frame body by integrating the gasket and the frame body through two-color molding method or inserting molding method. The above gasket can minimize the generation of gases which contaminate a magnetic disc and the like used in electronic equipment, and is excellent in its being lightweight and in sealability.

## Description

### BACKGROUND OF THE INVENTION

### 1. Field of the Invention

The present invention relates to a gasket fitted to a frame and a process for the production of said gasket fitted to a frame. More particularly, the present invention pertains to a gasket which is fitted to a frame and hermetically seals the joint surface between a cover body and a main body in lightweight equipment, for instance, hard disc equipment of a computer; and a process for the production of said gasket fitted to a frame. The gasket fitted to a frame according to the present invention prevents gases from generating at the time of using electronic equipment, and is applicable to techniques for hermetically sealing the hard disc equipment, etc. of a computer installed inside a robot in an automatic manufacturing line or the like so as to completely keep water and air away from the equipment, etc.

### 2. Description of the Related Arts.

The development of electronic equipment in recent years really amazes the persons concerned. The aforesaid equipment, which is subjected to printed circuit on a substrate by the use of integrated circuits utilizing semiconductors, is directed to compactified lightweight equipment, and is prone to be readily damaged by moisture or dampness in particular. Accordingly, the hermetically sealing performance of a gasket is a factor of importance for the performance and durability of the electronic equipment, which gasket is used for hermetically sealing the joint surface between a cover body and a box type main body having built-in integrated circuits mentioned above.

It is customary for the purpose of hermetical sealing to integrate a cover body and a box type main body having built-in integrated circuits into equipment by interposing a gasket which hermetically seals the joint surface between said both the bodies and tightening them with fixing bolts. There has heretofore been used a high density urethane foam material as a gasket material. The urethane foam material is in the form of thin sheet foam, and is used in many cases by sticking an adhesive tape on the urethane sheet foam and punching the sheet foam into a prescribed shape. In addition, there is proposed a gasket wherein an elastomer is fixed to both sides of a frame body which is manufactured by inserting into a mold, a frame body composed of stainless steel or a synthetic resin, and injection molding the elastomer onto the frame body { refer to Japanese Patent Application Laid-Open No. 283698/1996 (Heisei-8)}. By adopting a frame body, the aforesaid gasket is imparted with rigidity, and is improved in attachability to equipment and machinery.

As synthetic resins which constitute the above mentioned frame body, there are employed thermoplastic resins, for instance, acrylonitrile styrene (AS) resin, acrylonitrile butadiene styrene (ABS) resin, styrenic resin such as polystyrene and syndiotactic polystyrene, olefinic resin such as polyethylene and polypropylene, polyamide resin such as nylon, polyester based resin such as polyethylene terephthalate and polybutylene terephthalate, modified polyphenylene ether, acrylic resin, polyacetal and polycarbonate.

The aforesaid gasket fitted to a frame in which the frame is constituted of a thermoplastic resin, as compared with a gasket fitted to a frame in which the frame is constituted of a metal such as stainless steel, is characterized by its being lightweight, and when a thermoplastic elastomer is employed as a gasket material, by facilitated adhesion between the frame and the gasket.

However, most of the above mentioned gaskets fitted to the frame, generate gases that contaminate a magnetic disc, when practical use of the main body of electronic equipment raises the temperature therein to 40 to 50°C. The gases thus generated are often accumulated on the disc of a hard disc apparatus and the like, thereby making it impossible to read out on the hard disc apparatus. For instance, polypropylene is usually incorporated with approximately 0.05 to 5% of various additives according to the purpose of use, and a lubricant, when being incorporated, is prone to generate gases because of its being volatile.

As a countermeasure for eliminating the above mentioned disadvantages, there is provided a mechanism of adsorbing the gases thus generated { refer to Japanese Patent Application Laid-Open No. 302178/1994 (Heisei-6)}, and there is provided a gas adsorbent in breathing holes that are made in the main body of electronic equipment to cope with the infiltration from the outside, of gases that contaminate magnetic discs {refer to Japanese Patent Application Laid-Open No. 36548 / 1994 (Heisei-6)}.

Nevertheless even with the use of the above mentioned provisions, it has been impossible to avoid the disadvantages that the use of electronic equipment is always accompanied by the generation of gases, and further the problems still remain unsolved in that it has been difficult to rapidly remove the gases thus generated by using the aforesaid gas adsorbing mechanism, and that the long-term use of electronic equipment deteriorates the effect on gas removal.

### SUMMARY OF THE INVENTION

Under such circumstances, it is a general object of the present invention to provide a gasket which is minimized in the generation of gases which contaminate a magnetic disc and the like at the time of using electronic equipment without installing a mechanism of gas removal on the main body of the electronic equipment in question.

Other objects of the present invention will be obvious from the text of the specification hereinafter disclosed.

In view of the foregoing, intensive extensive research and investigation were accumulated by the present inventors in order to achieve the above mentioned objects. As a result, it has been found that the objects can been achieved, since no gas is generated during the use of electronic equipment, by constituting a frame body of specific propylene homopolymer and/or propylene copolymer comprising propylene as a principal component. It being so, the present invention has been accomplished by the above mentioned findings and information.

Specifically, the present invention provides a gasket fitted to a frame body, characterized in that said frame body comprising polypropylene produced through polymerization by using a metallocene catalyst is integrated with said gasket comprising an elastic body (a); a gasket fitted to a frame body, characterized in that said frame body comprising propylene homopolymer and/or propylene copolymer comprising propylene as a principal component each free from a lubricant, is integrated with said gasket comprising an elastic body (b); a gasket fitted to a frame body, characterized in that said frame body comprising propylene homopolymer and/or propylene copolymer comprising propylene as a principal component each having been heat treated, is integrated with said gasket comprising an elastic body (c); a gasket fitted to a frame body, characterized in that said frame body comprising propylene homopolymer and/or propylene copolymer comprising propylene as a principal component each having an MFR (melt flow rate) at a temperature of 230°C at a load of 2,16 kgf (21.2 N) being at most 20 g/10minutes in accordance with JIS (Japanese Industrial Standard) K7210, is integrated with said gasket comprising an elastic body (d); and processes for the production of said gaskets (a),(b),(c) and (d), respectively which comprises integrating said frame body with said gasket by two-color molding method or inserting molding method.

### BRIEF DESCRIPTION OF THE DRAWINGS

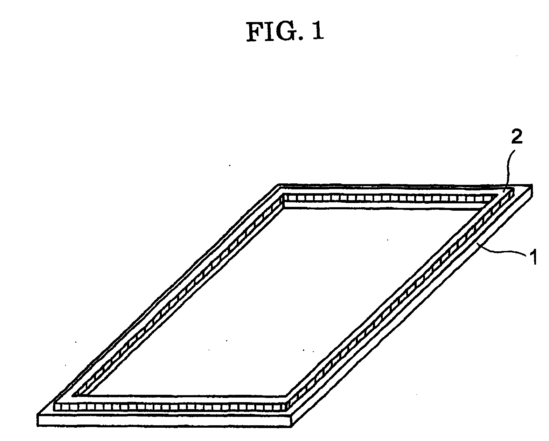

FIG.1 is a perspective illustration which shows a gasket fitted to a frame body according to the present invention, and which is viewed from the sealing surface side.

### DESCRIPTION OF THE PREFERRED EMBODIMENTS

The frame body in the gasket fitted to the frame body (a) according to the present invention is constituted of polypropylene produced through polymerization by using a metallocene catalyst. There is usable, as the metallocene catalyst, any of the polymerization catalysts each containing a transition metal compound that are described, for instance, in Japanese Patent Application Laid-Open Nos. 202152/1993 (Heisei-5), 25343/1994 (Heisei-6), 206921/1994 (Heisei-6), 345809/1994 (Heisei-6), 70227/1995 (Heisei-7), 325327/1996 (Heisei-8), etc. The polypropylene to be used in the present invention can be produced through a conventional process by the use of the above mentioned metallocene catalyst. The molecular weight distribution (Mw: weight-average molecular weight/ Mn: number-average molecular weight) of the polypropylene to be used in the present invention, is preferably at most 3.5, particularly preferably in the range of 1.5 to 3.0 from the viewpoint of its capability of sufficiently lessening the generation of gases that contaminate electronic equipment from a gasket fitted to a frame body during the use of said gasket fitted to a frame body in the electronic equipment. In addition, the MFR { melt flow rate as measured at a temperature of 230°C at a load of 2,16 kgf (21.2 N) in accordance with JIS K7210} of the polypropylene to be used in the present invention, is in the range of preferably 1.0 to 60 g/10minutes, particularly preferably 10 to 20 g/10minutes.

The frame body in the gasket fitted to the frame body (b) according to the present invention is constituted of propylene homopolymer and/or propylene copolymer comprising propylene as a principal component each free from a lubricant, and the frame body in the gasket fitted to a frame body (c) according to the present invention is constituted of propylene homopolymer and/or propylene copolymer comprising propylene as a principal component each having been heat treated. The propylene copolymer comprising propylene as a principal component is exemplified by the copolymer of propylene and a small amount of an other α -olefin such as propylene/ethylene copolymer and propylene/4-methyl-1-pentene copolymer.

The polypropylene relating to the gasket fitted to the frame body (b) and the gasket fitted to a frame body (c), is not the polypropylene produced through polymerization by using a metallocene catalyst, but is conventional polypropylene specifically exemplified by isotactic polypropylene and atactic polypropylene, for instance, polypropylene which is obtained by polymerizing propylene in the presence of, for instance, Ziegler catalyst (titanium base). A random copolymer among the aforesaid copolymers is obtained in the presence of a small amount of ethylene or an other α -olefin at the time of polymerization, while block copolymer is obtained by producing propylene homopolymer, and thereafter polymerizing ethylene in many cases.

A frame body, when being constituted of propylene homopolymer and/or propylene copolymer comprising propylene as a principal component (hereinafter referred to as "polypropylene etc.") each free from a lubricant which is a generation source of gases, does not generate a gas even under an environment of 40 to 50°C. By the term lubricant as mentioned herein is meant an additive which imparts the propylene and the like with lubricity needed for facilitating molding processing thereof, and is specifically exemplified by hydrocarbon-base lubricants such as paraffin and wax, fatty acid-base lubricants such as stearic acid, metallic soap-base lubricants such as calcium stearate, fatty acid derivative-base lubricants such as fatty acid amides, and the like.

The frame body which is composed of the "polypropylene etc." preferably comprises the "polypropylene etc." free from any additive generating gases at a temperature of 120°C or lower. Examples of the additives generating gases at 120°C or lower include antioxidants such as phenol substitution products and aromatic amines, various stabilizing agents such as ultraviolet stabilizers exemplified by hindered amine-base products and benzophenone-base products, plasticizers such as phthalic acid ester typified by DOP (dioctyl phthalate), flame retardants which comprise a halogen-base flame retardant, antimony oxide or a phosphorus-base flame retardant each alone or in combination of at least two species among them.

In addition, the "polypropylene etc.", even if containing a lubricant, can be heat treated for gas removal. Therefore a frame body, when being constituted of the "polypropylene etc." which has been heat treated, does not generate a gas even under an environment of 40 to 50°C. The heat treatment of the "polypropylene etc." can be put into practice prior to the shaping into a frame body at a temperature of 80 to 150°C, preferably 100 to 130°C , for 1 to 48 hours, preferably 5 to 24 hours.

The frame body in the gasket fitted to the frame body (d) according to the present invention is constituted of propylene homopolymer and/or propylene copolymer comprising propylene as a principal component each having an MFR (melt flow rate) at a temperature of 230°C at a load of 2,16 kgf (21.2 N) being at most 20 g/10minutes as measured in accordance with JIS K7210. The propylene copolymer comprising propylene as a principal component is exemplified by the copolymer of propylene and a small amount of an other α -olefin such as propylene/ethylene copolymer and propylene/4-methyl-1-pentene copolymer.

The polypropylene relating to the gasket fitted to the frame body (d), is not the polypropylene produced through polymerization by using a metallocene catalyst, but is conventional polypropylene specifically exemplified by isotactic polypropylene and atactic polypropylene, for instance, polypropylene which is obtained by polymerizing propylene in the presence of, for instance, Ziegler catalyst (titanium base). A random copolymer among the above mentioned copolymers is obtained in the presence of a small amount of ethylene or an other α -olefin, while block copolymer among them is obtained by producing propylene homopolymer, and then polymerizing ethylene in many cases.

A frame body, when being constituted of propylene homopolymer and/or propylene copolymer comprising propylene as a principal component ("polypropylene etc.") each having an MFR as described hereinbefore of at most 20g/10 minutes, preferably in the range of 0.1 to 10 g/10minutes, does not generate gases even under an environment of 40 to 50°C. In this case, a low value of MFR means a high molecular weight of "polypropylene etc.", and at the same time, a small amount of low molecular weight components that are gas generating components. For this reason, even a long-term use of such "polypropylene etc." for hard disc apparatuses exerts slightly adverse influence upon hard discs.

In regard to elastic bodies which constitute the gasket in a gasket fitted to a frame body (a), (b), (c) or (d) in the present invention, there are usable vulcanized rubber such as butyl rubber and EPDM, and thermoplastic elastomer. As the thermoplastic elastomers, there are usable styrenic, olefinic, urethane-based and ester-based thermoplastic elastomers, of which is preferably usable in particular the copolymer which comprises at least one polymer block composed principally of a vinylic aromatic compound and at least one polymer block composed principally of a conjugated diene compound.

More specific examples of said elastomers include:
① Block copolymer of crystalline polyethylene and ethylene/butylene styrene random copolymer, said block copolymer being obtained by hydrogenating block copolymer of polybutadiene and butadiene-styrene random copolymer; and
② Block copolymer of polybutadiene and polystyrene, block copolymer of polyisoprene and polystyrene, diblock copolymer of crystalline polyethylene and polystyrene, said diblock copolymer being obtained by hydrogenating block copolymer of polybutadiene or ethylene-butadiene random copolymer and polystyrene, triblock copolymer ( SEBS ) of styrene-ethylene/ butylene-styrene, and triblock copolymer ( SEPS ) of styrene-ethylene/ propylene-styrene, in particular, block copolymer of styrene-ethylene/ butylene-styrene, and block copolymer of styrene-ethylene/ propylene-styrene. Any one of the above-exemplified thermoplastic elastomers may be used alone or in combination with at least one other elastomer mentioned above.

The above mentioned "polypropylene etc." or thermoplastic elastomer can be imparted with an antistatic property by adding thereto, a filler capable of imparting electroconductivity thereto. By imparting an antistatic property, it is made possible to prevent dust or dirt from sticking to the gasket and the frame body in the production step of the gasket fitted to the frame body. Examples of fillers capable of imparting electroconductivity include powders and fibers of a metal such as iron, stainless steel and aluminum, electroconductive fillers such as carbon black and carbon fiber, polyalkylamine, polyalkylsulfonate, quaternary ammonium chloride and alkylbetaine.

The amount of the above mentioned fillers to be added to the "polypropylene etc." or thermoplastic elastomer is preferably such an amount that the "polypropylene etc." or thermoplastic elastomer is made to have each a volume resistivity of at most 1× 10⁸ Ω cm. In the case where the frame body is required to have properties of shielding electromagnetic wave, said volume resistivity is preferably at most 1× 10²Ω cm. In addition, the thermoplastic elastomer, when incorporated with any one of the fillers, has JIS hardness A of preferably at most 80 degrees, particularly preferably in the range of 10 to 50 degrees.

It is possible in the present invention to add a reinforcing material to the foregoing "polypropylene etc." or thermoplastic elastomer to the extent that the effects of the present invention are not impaired thereby. Said reinforcing material is exemplified by inorganic fibers such as glass fiber and carbon fiber, inorganic fillers such as mica and talc, and whiskers of potassium titanate and the like.

The integration of the frame body and the gasket is carried out by the junction between the "polypropylene etc." constituting the frame body and the thermoplastic elastomer constituting the gasket, preferably by means of two-color molding method or inserting molding method.

By means of the two-color molding method, there is formed the composite gasket fitted to the frame body in which the "polypropylene etc." is integrated with the thermoplastic elastomer layer formed on the surface thereof through the steps of firstly subjecting the "polypropylene etc." constituting the frame body to melt injection molding into a mold with an injection molding machine for exclusive use, and after the resultant molding thus formed is solidified, subjecting the thermoplastic elastomer which constitutes the gasket and is excellent in fusion adhesivity to melt injection molding with an injection molding machine for exclusive use so as to form the thermoplastic elastomer layer on part of the frame body consisting of the molding of the "polypropylene etc." Such two-color molding method is capable of producing the gasket fitted to the frame body in high production efficiency at a low cost.

On the other hand, by means of the inserting molding method, there is obtained the composite gasket fitted to the frame body in which the frame body is integrated with the thermoplastic elastomer layer formed on part thereof through the steps of preparing in advance, the frame body having a prescribed shape by any of various well known molding methods, placing the resultant frame body in a mold, and then forming the thermoplastic elastomer layer on part of the frame body by subjecting the thermoplastic elastomer to melt injection molding thereonto by means of an injection molding machine.

The gasket fitted to the frame body according to the present invention can minimize and prevent the gases which contaminate a magnetic disc and the like from being generated at the time of using electronic equipment by constituting the frame body of the specific "polypropylene etc." as described hereinbefore. Moreover, the use of the "polypropylene etc." in place of a metallic material as a material of construction for the frame body dispenses with a step of rust prevention treatment, enables the gasket fitted to the frame as a product to become lightweight, enables the production of the frame body at a low cost and high efficiency in high accuracy and precision by using a single mold and die, and also enables the recycling of the "polypropylene etc."

In what follows, the present invention will be described in further detail with reference to comparative examples and working examples, which however shall never limit the present invention thereto.

### Example 1

FIG.1 is a perspective illustration which shows the gasket fitted to a frame body according to the present invention, and which is viewed from the sealing surface side, wherein 1 denotes frame body, and 2 indicates gasket. The gasket fitted to the frame body measured 100mm × 70mm, and was fabricated by two-color molding method in the following manner.

The frame body 1 was prepared from polypropylene which was produced by the use of a metallocene catalyst, and had a molecular weight distribution (Mw/Mn) of 2.0 and an MFR of 15g/10min. The thermoplastic elastomer constituting the gasket 2 was prepared by kneading 100 parts by weight of SEPS having a number average molecular weight of 100,000 and a styrene moiety content of 30% by weight; 150 parts by weight of paraffin base oil having a kinematic viscosity at 40°C of 380mm²/sec ( manufactured by Idemitsu Kosan Co.,Ltd. under the trade name "Diana Process Oil PW 380" having a weight average molecular weight of 750 ); and 12.5 parts by weight of polypropylene same as in the frame body 1. The resultant thermoplastic elastomer had a JIS hardness A of 22 degrees.

Thereafter, by the use of an injection molding machine (manufactured by Nissei Plastic Industrial Co.,Ltd. under the trade name " DC60E5ASE "), the above prepared polypropylene for the frame body was subjected to melt injection molding into a mold at a mold temperature of 40°C and a resin temperature of 180°C, and subsequently the above-prepared thermoplastic elastomer for the gasket was subjected to melt injection molding onto the frame body in the mold at a mold temperature of 40°C and a resin temperature of 230°C. After all, there was prepared a gasket fitted to the frame body wherein the gasket was integrated with the frame body.

The gasket fitted to the frame body as prepared in the above mentioned manner, was used in a hard disc apparatus of a computer. As a result, over a long period of time there was no occurrence of failure or trouble considered to be due to gas generation and besides, sufficient sealability between the gasket and the apparatus was preserved for a long period of time.

### Example 2

The gasket fitted to the frame body measuring 100mm × 70mm as shown in FIG.1 was fabricated by two-color molding method in the following manner.

The frame body 1 was prepared from polypropylene which was free from a lubricant ( manufactured by Chisso Corporation under the trade name "CF 3001"). The thermoplastic elastomer constituting the gasket 2 was prepared by kneading 100 parts by weight of SEPS having a number average molecular weight of 100,000 and a styrene moiety content of 30% by weight; 150 parts by weight of paraffin base oil having a kinematic viscosity at 40°C of 380mm²/sec ( manufactured by Idemitsu Kosan Co.,Ltd. under the trade name "Diana Process Oil PW 380" having a weight average molecular weight of 750 ); and 12.5 parts by weight of polypropylene same as in the frame body 1. The resultant thermoplastic elastomer had a JIS hardness A of 22 degrees.

Thereafter, by the use of an injection molding machine (manufactured by Nissei Plastic Industrial Co.,Ltd. under the trade name " DC60E5ASE "), the above prepared polypropylene for the frame body was subjected to melt injection molding into a mold at a mold temperature of 40°C and a resin temperature of 180°C, and subsequently the above-prepared thermoplastic elastomer for the gasket was subjected to melt injection molding onto the frame body in the mold at a mold temperature of 40°C and a resin temperature of 230°C . After all, there was prepared a gasket fitted to the frame body wherein the gasket was integrated with the frame body.

The gasket fitted to the frame body as prepared in the above mentioned manner, was used in a hard disc apparatus of a computer. As a result, over a long period of time there was no occurrence of failure or trouble considered to be due to gas generation and besides, sufficient sealability between the gasket and the apparatus was preserved for a long period of time.

### Comparative Example 1

The procedure in Example 2 was repeated to produce a gasket fitted to a frame body except that there was used polypropylene constituting the frame body 1 which contained a metallic soap salt-base lubricant ( manufactured by Japan Polychem Co.,Ltd. under the trade name "EX6") in place of the polypropylene (CF3001).

The gasket fitted to the frame body as prepared in the above mentioned manner, was used in a hard disc apparatus of a computer to carry out durability teat. As a result, there was caused defective reading out considered to be due to gases generated.

### Example 3

The procedure in Example 2 was repeated to produce a gasket fitted to a frame body except that there was used polypropylene constituting the frame body 1, and containing calcium stearate ( manufactured by Japan Polychem Co.,Ltd. under the trade name "MA03") which had been heat treated in an oven at 110°C for 24 hours in place of the polypropylene ( trade name "CF3001").

The gasket fitted to the frame body as prepared in the above mentioned manner, was used in a hard disc apparatus of a computer. As a result, over a long period of time there was no occurrence of failure or trouble considered to be due to gas generation and besides, sufficient sealability between the gasket and the apparatus was preserved for a long period of time.

### Comparative Example 2

The procedure in Example 3 was repeated to produce a gasket fitted to a frame body except that there was used polypropylene constituting the frame body 1, and containing calcium stearate ( manufactured by Japan Polychem Co.,Ltd. under the trade name "MA03") which had not been heat treated.

The gasket fitted to the frame body as prepared in the above mentioned manner, was used in a hard disc apparatus of a computer to carry out durability teat. As a result, there was caused defective reading out considered to be due to gases generated.

### Example 4

The gasket fitted to the frame body measuring 100mm × 70mm as shown in FIG.1 was fabricated by two-color molding method in the following manner.

The frame body 1 was prepared from polypropylene which had an MFR at a temperature of 230°C and a load of 2.16 kgf (21.2 N) of 13g/10min ( manufactured by Sumitomo Chemical Co.,Ltd. under the trade name "Noblen X101"). The thermoplastic elastomer constituting the gasket 2 was prepared by kneading 100 parts by weight of SEPS having a number average molecular weight of 100,000 and a styrene moiety content of 30% by weight; 150 parts by weight of paraffin base oil having a kinematic viscosity at 40°C of 380mm²/sec ( manufactured by Idemitsu Koasan Co.,Ltd. under the trade name "Diana Process Oil PW 380" having a weight average molecular weight of 750 ); and 12.5 parts by weight of polypropylene same as in the frame body 1. The resultant thermoplastic elastomer had a JIS hardness A of 22 degrees

Thereafter, by the use of an injection molding machine (manufactured by Nissei Plastic Industrial Co.,Ltd. under the trade name " DC60E5ASE "), the above prepared polypropylene for the frame body was subjected to melt injection molding into a mold at a mold temperature of 40°C and a resin temperature of 180°C, and subsequently the above-prepared thermoplastic elastomer for the gasket was subjected to melt injection molding onto the frame body in the mold at a mold temperature of 40°C and a resin temperature of 230°C . After all, there was prepared a gasket fitted to the frame body wherein the gasket was integrated with the frame body.

The gasket fitted to the frame body as prepared in the above mentioned manner, was used in a hard disc apparatus of a computer. As a result, over a long period of time there was no occurrence of failure or trouble considered to be due to gas generation and besides, sufficient sealability between the gasket and the apparatus was preserved for a long period of time.

### Comparative Example 3

The procedure in Example 4 was repeated to produce a gasket fitted to a frame body except that there was used polypropylene constituting the frame body 1, and having an MFR at a temperature of 230°C and a load of 2.16 kgf (21.2 N) of 40g/10min ( manufactured by Sumitomo Chemical Co.,Ltd. under the trade name "Noblen X101A") in place of the polypropylene having an MFR of 13g/10min ("Nohprene X101").

The gasket fitted to the frame body as prepared in the above mentioned manner, was used in a hard disc apparatus of a computer to carry out durability teat. As a result, there was caused defective reading out considered to be due to gases generated.

## Claims

1. A gasket fitted to a frame body, characterized in that said frame body comprising polypropylene produced through polymerization by using a metallocene catalyst is integrated with said gasket comprising an elastic body.

2. The gasket fitted to a frame body according to Claim 1, wherein the elastic body which constitutes the gasket is a thermoplastic elastomer.

3. The gasket fitted to a frame body according to Claim 1, wherein the integration is made by fused adhesion between the polypropylene which constitutes the frame body and the thermoplastic elastomer which constitutes the gasket.

4. A process for producing the gasket fitted to a frame body as set forth in Claim 3, wherein the gasket and the frame body are integrated through two-color molding method to form the gasket fitted to the frame body.

5. A process for producing the gasket fitted to a frame body as set forth in Claim 3, wherein the gasket and the frame body are integrated through inserting molding method to form the gasket fitted to the frame body.

6. A gasket fitted to a frame body, characterized in that said frame body comprising propylene homopolymer and/or propylene copolymer which comprises propylene as a principal component each free from a lubricant is integrated with said gasket comprising an elastic body.

7. The gasket fitted to a frame body according to Claim 6, wherein the propylene homopolymer and/or propylene copolymer comprising propylene as a principal component each free from a lubricant are each free from an additive which generates a gas at a temperature of 120°C or lower.

8. The gasket fitted to a frame body according to Claim 6, wherein the elastic body which constitutes the gasket is a thermoplastic elastomer.

9. The gasket fitted to a frame body according to Claim 8, wherein the integration is made by fused adhesion between the propylene homopolymer and/or propylene copolymer comprising propylene as a principal component which constitutes the frame body and the thermoplastic elastomer which constitutes the gasket.

10. A process for producing the gasket fitted to a frame body as set forth in Claim 9, wherein the gasket and the frame body are integrated through two-color molding method to form the gasket fitted to the frame body.

11. A process for producing the gasket fitted to a frame body as set forth in Claim 9, wherein the gasket and the frame body are integrated through inserting molding method to form the gasket fitted to the frame body.

12. A gasket fitted to a frame body, characterized in that said frame body comprising propylene homopolymer and/or propylene copolymer which comprises propylene as a principal component each having been heat treated, is integrated with said gasket comprising an elastic body.

13. The gasket fitted to a frame body according to Claim 12, wherein the elastic body which constitutes the gasket is a thermoplastic elastomer.

14. The gasket fitted to a frame body according to Claim 13, wherein the integration is made by fused adhesion between the propylene homopolymer and/or propylene copolymer comprising propylene as a principal component which constitutes the frame body and the thermoplastic elastomer which constitutes the gasket.

15. A process for producing the gasket fitted to a frame body as set forth in Claim 13, wherein the gasket and the frame body are integrated through two-color molding method to form the gasket fitted to the frame body.

16. A process for producing the gasket fitted to a frame body as set forth in Claim 13, wherein the gasket and the frame body are integrated through inserting molding method to form the gasket fitted to the frame body.

17. A gasket fitted to a frame body, characterized in that said frame body comprising propylene homopolymer and/or propylene copolymer which comprises propylene as a principal component each having an MFR (melt flow rate) at a temperature of 230°C at a load of 2,16 kgf ( 21.2 N ) being at most 20g/10minutes as measured in accordance with JIS K7210, is integrated with said gasket comprising an elastic body.

18. The gasket fitted to a frame body according to Claim 17, wherein the propylene homopolymer and/or propylene copolymer comprising propylene as a principal component have each an MFR at a temperature of 230°C at a load of 2,16 kgf (21.2 N) being in the range of 0.1 to 10 g/ 10minutes.

19. The gasket fitted to a frame body according to Claim 17, wherein the elastic body which constitutes the gasket is a thermoplastic elastomer.

20. The gasket fitted to a frame body according to Claim 19, wherein the integration is made by fused adhesion between the propylene homopolymer and/or propylene copolymer comprising propylene as a principal component which constitutes the frame body and the thermoplastic elastomer which constitutes the gasket.

21. A process for producing the gasket fitted to a frame body as set forth in Claim 20, wherein the gasket and the frame body are integrated through two-color molding method to form the gasket fitted to the frame body.

22. A process for producing the gasket fitted to a frame body as set forth in Claim 20, wherein the gasket and the frame body are integrated through inserting molding method to form the gasket fitted to the frame body.
